# EUROPÄISCHE PATENTSCHRIFT

(11) **EP 1 865 349 B1**
(45) Veröffentlichungstag und Bekanntmachung des Hinweises auf die Patenterteilung: **21.07.2010**
(21) Anmeldenummer: 06025912.4
(22) Anmeldetag: 14.12.2006
(51) Int. Cl.: G02B 6/32, H01R 43/048

(54) **Vorrichtung zur Festlegung des Endes eines Signalleiters in einem Sackloch eines Anschlusselementes**
Device for establishing the end of a signal conductor in a blind hole of a connection element
Dispositif destiné à la fixation de l'extrémité d'un conducteur de signal dans un trou borgne d'un élément de raccordement

(30) Priorität: 10.06.2006 DE 102006027062
(43) Veröffentlichungstag der Anmeldung: 12.12.2007
(73) Patentinhaber: Schäfer Werkzeug- und Sondermaschinenbau GmbH, 76669 Bad Schönborn (DE)
(72) Erfinder: Neubauer, Stefan, 67166 Otterstadt (DE)
(74) Vertreter: HOFFMANN EITLE

(56) Entgegenhaltungen:
- DE-U1- 8 808 375
- US-A- 5 930 891

## Beschreibung

### Technisches Gebiet

Die Erfindung betrifft eine Vorrichtung zur Festlegung des Endes eines Signalleiters mit einem Durchmesser von weniger als 0,5 mm in einem Sackloch eines Anschlusselementes, bei dem das Ende parallel zu seiner Längsrichtung in das Sackloch eingeführt, mit dem Boden des Sacklochs verpresst und darin fixiert wird.

### Stand der Technik

Eine solche Vorrichtung ist aus der EP 1 152 271 bekannt. Sie gelangt bei der Herstellung eines Lichtwellenleiters zur Anwendung und hat den Zweck, eine dauerhafte Anlage zwischen der Stirnfläche eines Lichtwellenleiters und dem Boden des Sacklochs zu gewährleisten. Dabei bedient sie sich der Verwendung eines metallischen Federbügels, der nach dem Einfügen des Lichtwellenleiters in das Sackloch eine Kralle in den Außenmantel des Lichtwellenleiters eindringen lässt und auf diesem Wege eine axial gerichtete Anpressung der Stirnfläche an den Boden des Sacklochs bewirkt. Da der Außenmantel des Lichtwellenleiters aus unvernetztem, thermoplastischen Werkstoff besteht, ist die Anpresswirkung nur wenig dauerhaft und es kommt insbesondere bei der Einleitung von Schwingungen oder einer geringfügigen Erwärmung sehr schnell zu einer unerwünschten Spaltausbildung im Bereich der Stirnfläche mit der Folge von zu Streu- und Dämpfungsverlusten bei der Signalübertragung.

Ferner sei auf die US-A-5 930 891 verwiesen, die die Merkmale des Oberbegriffs von Anspruch 1 zeigt.

### Darstellung der Erfindung

Der Erfindung liegt die Aufgabe zu Grunde, eine Vorrichtung der eingangs genannten Art derart weiter zu entwickeln, dass eine dauerhafte Anpressung der Stirnfläche an den Boden des Sacklochs gewährleistet ist.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei der erfindungsgemäßen Vorrichtung ist es vorgesehen, dass zur Aufnahme des Anschlusselementes eine Klemmeinrichtung vorgesehen ist, die parallel zur Längsrichtung des Signalleiters gegen die Kraft einer Feder relativverschiebbar ist und dass ein Sensor zur Erfassung der Größe der Relativverschiebung vorgehen ist, der die Klemmeinrichtung bei Erreichen des Bodens durch das Ende gegen weiteres Verschieben blockiert und zugleich ein Fixiermittel aktiviert, dass den Signalleiter und das Anschlusselement quer zur Längsrichtung miteinander verbindet.

Das Fixiermittel wird somit erst betätigt, wenn die Stirnfläche des Signalleiters den Boden des Sackloches sicher anliegend berührt. Auf diese Weise ist eine sichere Signalübertragung gewährleistet.

Durch die Fixierung des Signalleiters quer zur Längsrichtung des Anschlusselementes, bei dem es sich um ein metallisches Anschlusselement oder eine Kunststoffferrule handeln kann, werden Kriechbewegungen innerhalb des den Signalleiter umschließenden, thermoplastischen Mantels bedeutungslos in Bezug auf die langfristige Anpressung zwischen der Stirnfläche und dem Boden, weil beide Teile einander in radialer Richtung umschließen. Auch bei Einleitung von Schwingungen oder erhöhten Temperaturen ist daher ein Abheben der Stirnfläche vom Boden des Anschlusselementes nicht mehr zu befürchten und eine sichere Signalleitung gewährleistet.

Der Signalleiter muss zur Gewährleistung einer zuverlässigen Anpressung seiner Stirnfläche an den Boden des Anschlußelementes auf einer gewissen Mindestlänge von seinen äußeren Umhüllungen aus Kunststoff befreit werden. Dadurch soll sicher gestellt werden, dass Reste der Umhüllungen die Stirnfläche nicht überlappen und die Signalübertragung beeinträchtigen können. Die Mindestlänge beträgt im allgemeinen 2 mm. Sie wird von dem weniger als 0,3 mm dicken Signalleiter bei des Anpressung an den Boden freitragend überbrückt. Um dabei ein Ausknicken des Signalleiters auszuschließen, hat es sich als vorteilhaft erwiesen, wenn die Feder so bemessen ist, dass die Klemmeinrichtung bei Einleitung einer Kraft von mindestens 0, 5 und höchstens 5 N verschiebbar ist. Trotz dieser geringen Kraft ist eine sichere Anlageberührung zwischen dem Signalleiter und dem Boden gewährleistet, vorteilhaft ist die Klemmeinrichtung und damit zugleich das Anschlusselement und das darin eingefügte Kabel mit dem Signalleiter bei Einleitung einer Kraft von mindestens 1, 0 und höchstens 2,5 N verschiebbar.

Der Weg, auf dem die Klemmeinrichtung, das Anschlusselement und das Kabel verschiebbar ist, soll max. 2 mm betragen. Auch dies trägt dazu bei, den extrem dünnen Signalleiter vor einem seitlichen Ausknicken bei seiner Anpressung an den Boden zu schützen.

Um sicher zu stellen, dass die Auslösung des Sensors an sich nicht bereits zu einem Ausknicken des Signalleiters bei seiner Anpressung an den Boden führt, hat es sich als vorteilhaft erwiesen, den Sensor berührungslos zu gestalten und beispielsweise einen photosensiblen oder eine kapazitiv arbeitende Ausführung des Sensors zu verwenden. Bevorzugt gelangt eine kapazitive Abstandsmessung zur Anwendung in Hinblick auf deren enorme Langlebigkeit und Robustheit.

Bei einer Ausführung, bei der die Vorrichtung zur Festlegung des Endes eines Lichtwellenleiters in einer Kunststoffferrule zur Anwendung gelangt, hat es sich als vorteilhaft erwiesen, wenn die Kunststofferrule laserverschweißbar ist und das Fixiermittel eine Laserschweißeinrichtung. Diese kann im Durchstrahlverfahren quer zur Längsrichtung wirksam sein.

Dabei hat es sich als vorteilhaft bewährt, wenn die Kunststoffferrule transparent ist. Sie kann an ihrem von dem Sackloch abgewandten Ende plan, bedarfsweise jedoch auch konkav oder konvex gewölbt ausgebildet sein, wobei sich der Vorteil einer besonders einfachen Zentrierbarkeit mit einer guten Lichtleitung zu einem Anschlusselement vereint. Konvexe Ausbildungen werden wegen ihrer besodners guten Verschmutzungssicherheit bevorzugt.

Derartige Kunststoffferrulen haben sich besonders bewährt, um die Dämpfungs- und Streuverluste bei der Signalübertragung zu vermindern, die sich ergeben können, wenn die Stirnfläche in Folge üblicher Ablängprozesse Abweichungen in Gestalt von Randausbrüchen, Abschrägungen und/oder Einwölbungen von der idealen Form aufweist. Die dadurch verursachten Streuungen werden durch das konvexe Ende gebündelt und auf einer verhältnismäßig großen Fläche gleichmäßig verteilt, wodurch das zu übertragende Signal in einer verhältnismäßig großen Querschnittsfläche zur Verfügung steht. Auch bei Verwendung von noch manuell betätigbaren Steckverbindungen ist dadurch unter Verwendung der hier in Rede stehenden, extrem dünnen Signaleiter eine sichere Signalübermittlung gewährleistet.

In Bezug auf die Festlegung des Endes eines Hochfrequenzleiters in einem metallischen Anschlusselement hat es sich als vorteilhaft bewährt, wenn das Anschlusselement zumindest eine Crimpfahne aufweist wenn die Fixiereinrichtung aus einem Crimpwerkzeug zur plastischen Verformung der Crimpfahne besteht.

Zweckmäßig sind an dem Anschlusselement zumindest ein Paar einander gegenüberstehender Crimpfahnen vorgesehen, die durch das Crimpwerkzeug gemeinsam verformbar sind. Die beim Crimpvorgang auf einander und auf den Signalleiter ausgeübten Kräfte werden dadurch gegenseitig kompensiert, was die Sicherheit der Signalsübertragung durch das erhaltene Produkt wesentlich verbessert.

Unabhängig von der Art der zur Anwendung gelangenden Fixiermittel ist es von hervorzuhebender Bedeutung, dass diese erst aktiviert werden, wenn die Stirnfläche des Signalleiters vorausgehend mit der erforderlichen Kraft an den Boden des Sackloches angepresst ist. Sie sind ferner nur in radialer Richtung wirksam. Schrumpf- oder elastische Rückverformungen der Fixiermittel im Anschluss an ihre Auslösung können daher nicht mehr zu einer nachträglichen Veränderung der Anpresskraft führen, mit der die Stirnfläche an den Boden angepresst ist. Für die Gewährleistung einer sicheren Signalübertragung ist das von großem Vorteil.

Die Erfindungsgemäße Vorrichtung ist einfach im Aufbau und von einer enormen Betriebssicherheit. Sie lässt es dadurch zu den extrem dünnen Signalleiter sicher handhabbar zu verarbeiten und mit den nötigen Anschlusselementen zu bestücken.

### Kurzbeschreibung der Zeichnung

In der in der Anlage beigefügter Zeichnung wir eine beispielhafte Ausführung der Erfindung gezeigt. Sie wird nachfolgend näher beschrieben. Es zeigen:
Fig.1: Eine Vorrichtung der erfindungsgemäßen Art in längsgeschnittener Darstellung.

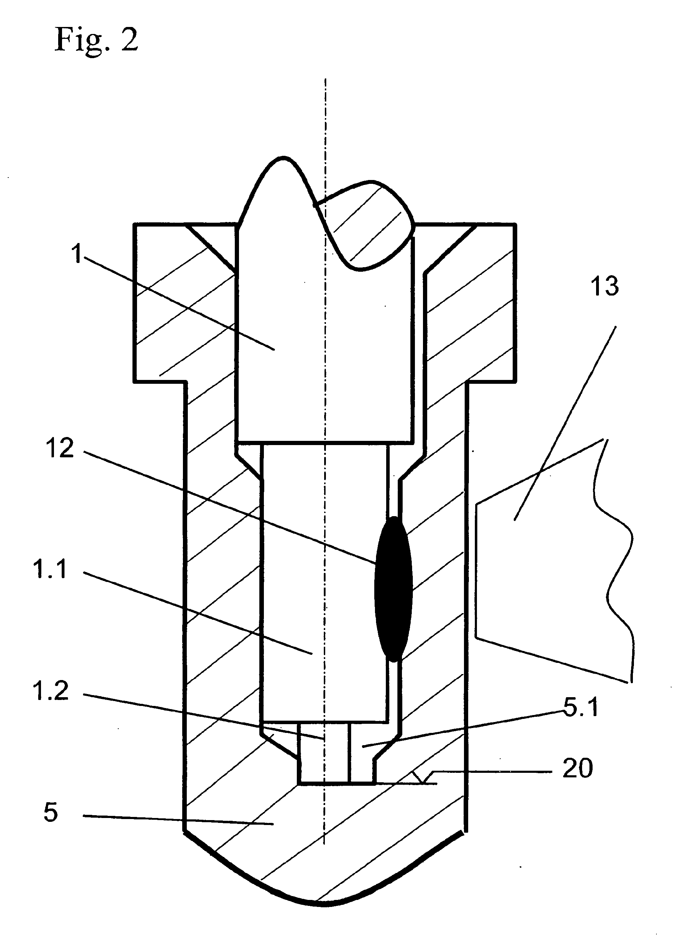

Fig. 2: eine Kunststoffferrule mit einem darin eingeschweißten Lichtwellenleiter.
Fig.3: ein metallisches Anschlusselement, an das ein Hochfrequenzkabel angecrimpt ist.

### Ausführung der Erfindung

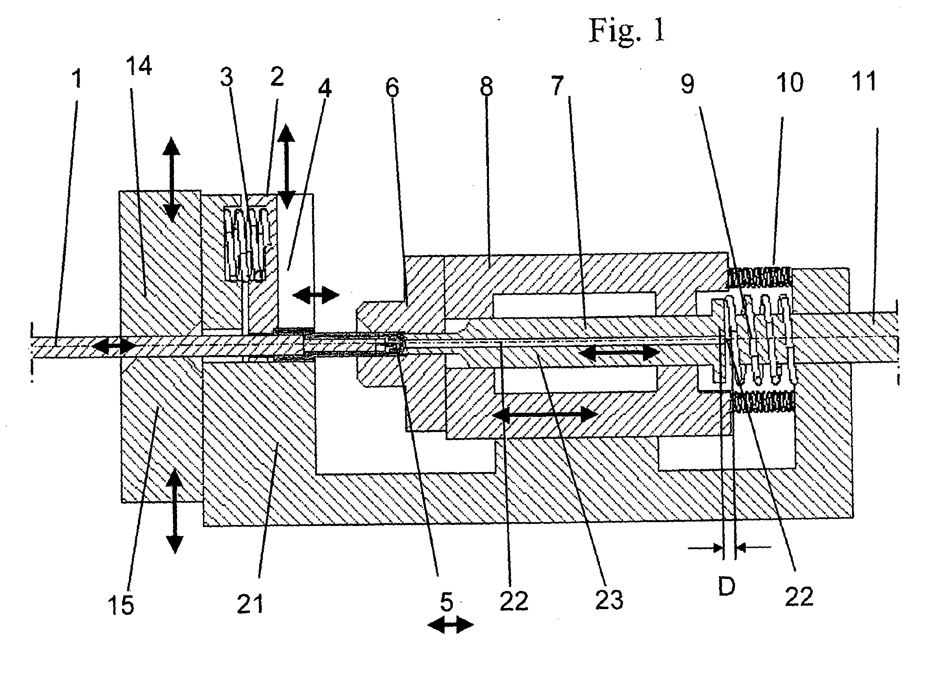

Die in Fig. 1 gezeigte Vorrichtung dient zur Festlegung des Endes eines in einem Kabel 1 enthaltenen Signalleiters 1.2 mit einem Durchmesser von weniger als 0,5 mm in dem Sackloch eines Anschlusselementes 5.

Die Vorrichtung umfasst einen Rahmen 21, in dem ein Schlitten 8 parallel zur Längsrichtung des Kabels 1 hin- und herverschiebbar gelagert ist. Der Schlitten 8 ist durch Druckfedern 10 auf dem rechten Ende des Rahmens 21 abgestützt und befindet sich in der Ruhelage in der dargestellten, linken Position, bezogen auf den Rahmen 21. Am linken Ende des Schlittens ist eine Aufnahmeplatte 6 für die anzuschweißenden Kunststoffferrulen befestigt. Sie ist von einer sich parallel zur Längsrichtung erstreckenden Bohrung durchdrungen, in die die anzuschweißenden Kunststoffferrulen mit Spiel leicht hin- und herverschiebbar einsetzbar sind. An die Bohrung schließt sich am rechten Ende eine weitere Öffnung an, in die der Abstützbolzen der Klemmeinrichtung 7 leicht verschiebbar eingesetzt ist. Der Abstützbolzen ist am rechten Ende mit einem radial vorspringenden Flansch versehen, der einen Bestandteil des kapazitiv arbeitenden Abstandssensors bildet, mit dem axiale Relativverlagerungen gemessen werden können. Am linken Ende ist der Abstützbolzen 7 durch einen Stift verlängert, der in die Bohrung der Aufnahmeplatte 6 leicht verschiebbar eingreift. Auf ihm und damit zugleich auf dem Abstützbolzen 7 stützt sich nach dem Einfügen der Kunstoffferrule deren vorderes Ende ab. Eine Relativverschiebung der Kunststoffferrule hat zugleich eine Relativverschiebung des Abstützbolzens 7 zu Folge und ist mittels des Abstandssensors erfassbar. Um sicher zu stellen, dass der Abstützbolzen 7 die Kunststofferrule 5 mit dem Stift 23 immer unmittelbar anliegend berührt, ist er einschließlich des Stiftes von einer Entlüftungsbohrung 22 durchdrungen. Eingeschlossene Luft kann bedarfsweise dadurch entweichen.

Auf der linken Wange des Rahmens 21 ist der Gegenbacken der Klemmeinrichtung 2 parallel zur Längsrichtung federnd gelagert.

Der Signalleiter 1.2 ist in einem Kabel 1 enthalten, das ihn mit mehreren Kunststoffschichten umhüllt und weist in dem aus dem Sackloch vorstehenden Bereich einen Außendurchmesser von 2,3 mm und ein kabelähnliches Aussehen und Verhalten in mechanischer Hinsicht auf. Die einzelnen Kunststoffschichten sind abgestuft in Richtung des vorderen Endes entfernt und in den verschiedenen Teilbereichen so an die verschiedenen Querschnitte des Sackloches angepasst, dass eine direkte Verpressung der Stirnfläche des Signalleiters 1.2 mit dem Boden des Sackloches möglich ist und dass der Signalleiter 1.2 bei einer Abbiegung des aus dem Sackloch vorstehenden Abschnitts keine Relativverlagerung in Bezug auf den Boden 20 erfährt.

Das Ende des Kabels 1 ist parallel zur Längsrichtung in das Sackloch 5.1 eingeführt. Es wird durch die Klemmbacken 14 und 15 gegen Herausfallen gesichert.

Das Sackloch 5.1 ist an seiner Mündung und in den Bereichen der Übergänge der Innendurchmesser jeweils kegelig erweitert, um das Einschieben des Signalleiters 1.2 und der ihn umschließenden Umhüllungen 1, 1.1 zu erleichtern. Auch Signalleiter, 1.2, die nebst ihrer Umhüllungen 1, 1.1, nicht völlig geradlinig ausgebildet sind, lassen sich daher problemlos einführen und sicher mit dem Boden verpressen.

Bei dem gezeigten Ausführungsbeispiel handelt es sich bei dem Signalleiter 1.2 um einen Lichtwellenleiter mit einem Durchmesser von 0,23 mm. Er kann aus Glas oder Kunststoff bestehen und ist unmittelbar umschlossen von einem sogenannten Cladding, das aus einem polymeren Werkstoff besteht. Über dem in der Zeichnung nicht gesondert dargestellten Cladding ist ein Mantel 1.1 aus Polyamid angeordnet, der einen Außendurchmesser von 1,54 mm hat und der seinerseits von einem Jacket 1 aus Polyamid umhüllt ist mit einem Außendurchmesser von 2,3 mm.

Zur Aufnahme des Anschlusselementes 5 ist eine Klemmeinrichtung 2,7 vorgesehen, die parallel zur Längsrichtung gegen die resultierende Kraft der ersten Feder 9 und einer zweiten Feder 3 relativ verschiebbar ist, wobei ein Abstandssensor zur Erfassung der Größe der Relativverschiebung vorgehen ist, der die Klemmeinrichtung 2, 7 bei Erreichen des Bodens 20 durch das Ende gegen weiteres Verschieben blockiert und zugleich ein Fixiermittel 13 aktiviert, dass die den Signalleiter 1.2 umschließende Außenhülle 1 und das Anschlusselement 5 quer zur Längsrichtung des Signalleiters 1.2 miteinander verbindet.

Die erste Feder 3 und die zweite Feder 9 sind so aufeinander abgestimmt, dass das Anschlusselement 5 bei Einleitung einer Kraft von mindestens 0, 5 und höchstens 5 N verschiebbar ist, vorzugsweise bei Einleitung einer Kraft von mindestens 1, 0 und höchstens 2,5 N.

Grundsätzlich genügt die erste Feder 9 zur Erreichung diesen Zweckes allein. Um die anzuschweißende Kunststofferrule einfügen zu können, ist es jedoch erforderlich, den Schlitten 8 vorübergehend gegen die Kraft der Federn 10 innerhalb des Rahmens nach rechts zu verschieben. In den dadurch am linken Ende geschaffenen Freiraum kann die Kunststoffferule leicht in radialer Richtung zugeführt und in die Bohrung der Aufnahmeplatte 6 eingefügt werden. Das kann mit einer automatischen Einrichtung geschehen. Im Anschluss daran wird der Schlitten 8 durch die Federn 10 zurück in die dargestellte, rechte Position gehoben. Dabei gelangt das linke Ende der in die Bohrung der Aufnahmeplatte 6 eingesetzten Kunststofferrule mit dem auf dem Rahmen 21 federnd abgestützten, linken Klemmbacken der Klemmeinrichtung 2, 7 zur Anlage und ist nicht länger radial verschiebbar. Der linke Klemmbacken umgreift die Kunststoffferrule dabei mit einer nach u-förmig nach unten geöffneten Ausnehmung. Er ist außerdem zu diesem Zweck mit einer Eintiefung versehen, die an das rechte Ende der Kunststoffferrule nach Form und Größe angepasst und ebenfalls nach unten offen ist. Nach dem Festschweißen der Kunststoffferrule 5 an dem Kabel 1 kann der linke Klemmbacken der Klemmeinrichtung dadurch nach oben von dem Kabel 1 und der Kunststoffferrule 5 abgehoben und beides nach links aus der Vorrichtung entnommen werden.

Die schwimmende Einspannung der Kunststofferrule während des Schweißprozesses zwischen zwei Federn 3,9 hat eine formstabile Aufnahme der Kunststoffferrule zu Folge. Das anzuschließende Kabel kann dadurch besonders einfach zugeführt und so mit der Kunststofferrule verpresst werden, dass der daraus vorstehende Signalleiter 1,2 keinen Schaden nimmt und genau in der vorgeschriebenen Zuordnung relativ zu der Kunststofferrule darin festgelegt wird.

Signalleiter 1,2, die als Lichtwellenleiter ausgebildet sind, können aus Glas oder Kunststoff bestehen. Glasausführungen erfordern zu Vermeidung von Randausbrüchen im Bereich der Stirnfläche optimierte Anpresskräfte. Werden demgegenüber Kunststoffausführungen verwendet, dann besteht die Gefahr plastischer Deformierungen der Stirnfläche. Auch das erfordert eine Optimierung der Anpresskräfte. Sie lässt sich bei der gezeigten, schwimmenden Abstützung der Kunststoffferrule besonders einfach herbeiführen. Bedarfsweise ist es möglich, zumindest eine der Federn 3, 9 hinsichtlich der Federkraft verstellbar auszubilden.

Bei der gezeigten Ausführung ist das Anschlusselement 5 um einen Weg D von max. 2 mm verschiebbar.

Der Abstandssensor arbeitet berührungslos, um eine mechanische Rückwirkung des Auslösemechanismus auf die Anpressung des Signalleiters 1.2 an den Boden 20 des Sackloches 5.1 auszuschließen. Bevorzugt gelangen kapazitiv oder photosensible Abstandsmesser zur Anwendung. Kapazitive Bauformen werden wegen ihrer geringen Baugröße, ihrer enormen Robustheit und wegen ihrer hohen Messgenauigkeit bevorzugt. Eine solche Bauform ist in der Zeichnung dargestellt. Sie ist besteht aus den beiden Kondensatorteilen 7,11, von denen das dem Anschlusselement 5 zugewandte einen Bestandteil eines in Längsrichtung verschiebbaren Bolzens 7 bildet, dessen von dem Kondensator abgewandtes Ende das Anschlusselement 5 durch die Kraft der ersten Feder 9 elastisch abstützt. Das Anschlusselement 5 ist mit seinem anderen Ende ebenfalls elastisch abgestützt auf der zweiten Feder 3. Die Federn 3 und 9 sind so aufeinander abgestimmt, dass das Anschlusselement 5 bei Einleitung einer Kraft von mindestens 0,5 und höchstens 5 N in Richtung des durch einen Kondensator gebildeten kapazitiven Abstandsmessers 19 verschiebbar ist.

Diese Änderung wird von dem Abstandssensor erkannt und dazu benutzt, jede weitere Verschiebung des Anschlusselementes 5 zu blockieren und zugleich das Fixiermittel 13 zu betätigen, vorliegend bevorzugt eine Laserschweiß- oder Crimpeinrichtung, die im Bereich der mit 4 bezeichneten Ausnehmung des linken Klemmbackens der Klemmeinrichtung 2 angreift.

Bei dem gezeigten Ausführungsbeispiel dient die Vorrichtung zur Festlegung des Endes eines Lichtwellenleiters in einer Kunststoffferrule, wobei die Kunststoffferrule laserversschweißbar ist und das Fixiermittel eine Laserschweißeinrichtung. Die Kunststoffferrule ist transparent ausgebildet und an ihrem von dem Sackloch abgewandten Ende konvex gewölbt. Die aus der Stirnfläche austretenden Lichtstrahlen werden auf der konvexen Wölbung so verteilt, dass sich insgesamt eine gleichmäßige Ausleuchtung ergibt. Für eine gute Signalübertragung ist das von großem Vorteil.

Es ist ferner zu erkennen, dass der Lichtwellenleiter, bezogen auf das zum Einführen in das Sackloch 5.1 erforderliche, radiale Spiel und die bei der Laserverschweißung auftretende Erwärmung radial verschoben wird, bezogen auf das Zentrum des Sacklochs. Diese Relativverschiebung hat keine Nachteile n Bezug auf die Qualität der Signalübertragung zur Folge.

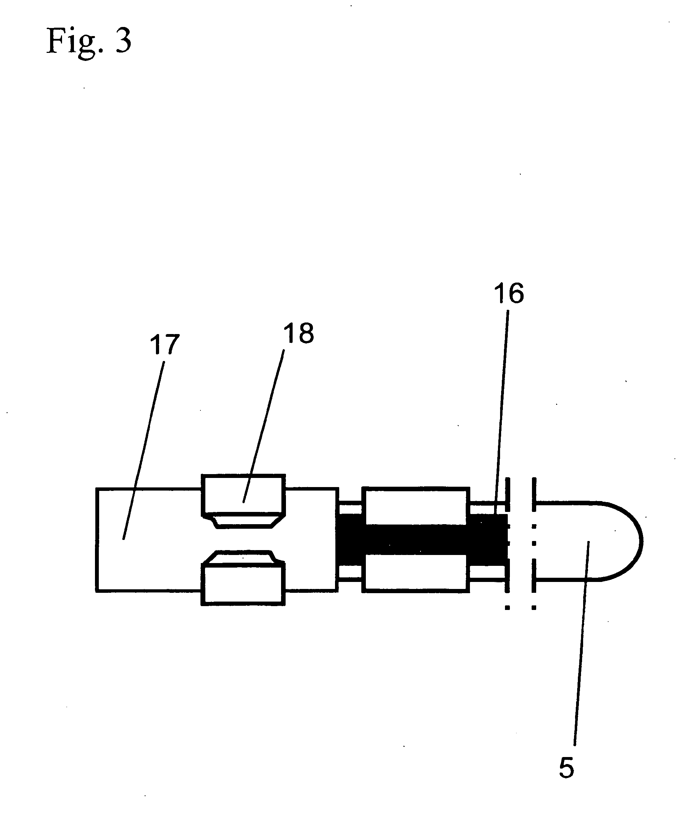

Die Vorrichtung lässt sich nach Fig. 3 auch zur Festlegung des Endes eines Hochfrequenzleiters in einem metallischen Anschlusselement verwenden, wobei das Anschlusselement 5 zumindest eine Crimpfahne 18 aufweist wobei die Fixiereinrichtung 13 aus einem Crimpwerkzeug zur plastischen Verformung der Crimpfahne 18 besteht.

Zweckmäßig ist dabei an dem Anschlusselement 5 zumindest ein Paar einander gegenüberstehender Crimpfahnen 18 vorgesehen, die durch das Crimpwerkzeug gemeinsam verformbar sind. Die Festlegung des Kabels 17 erfolgt somit ebenfalls mit Hilfe von Festlegungsmitteln 13, die quer zu dessen Längsrichtung wirksam und damit über extrem lange Zeiträume formbeständig sind. Crimpprozesse dieser Art sind an sich bekannt. Sie sind extrem kostengünstig durchführbar, haben es bisher aber noch nicht erlaubt, eine in axialer Richtung hochpräzise Festlegung von Kabeln sicher zu stellen.

## Patentansprüche

1. Vorrichtung zur Festlegung des Endes eines Signalleiters (1.2) mit einem Durchmesser von weniger als 0,5 mm in einem Sackloch (5.1) eines Anschlusselementes (5), bei dem das Ende parallel zur Längsrichtung des Signalleiters (1.2) in das Sackloch (5.1) eingeführt und durch nachfolgendes Betätigen von Fixiermitteln (13) darin fixiert wird, wobei zur Aufnahme des Anschlusselementes (5) eine Klemmeinrichtung (2, 7) vorgesehen ist, **dadurch gekennzeichnet, dass** die Klemmeinrichtung parallel zur Längsrichtung gegen die Kraft einer ersten Feder (9) verschiebbar ist, dass ein Sensor zur Erfassung der Größe der Verschiebung vorgesehen ist, der die Klemmeinrichtung (2, 7) bei Erreichen des Bodens (20) durch das Ende des Signalleiters (1.2) gegen weiteres Verschieben blockiert und zugleich ein Fixiermittel (13) aktiviert, das den Signalleiter (1.2) und das Anschlusselement (5) quer zur Längsrichtung miteinander verbindet.

2. Vorrichtung nach Anspruch 1, **dadurch gekennzeichnet, dass** die erste Feder (9) so bemessen ist, dass die Klemmeinrichtung (2, 7) bei Einleitung einer Kraft von mindestens 0, 5 und höchstens 5 N verschiebbar ist.

3. Vorrichtung nach Anspruch 1, **dadurch gekennzeichnet, dass** die erste Feder (9) so bemessen ist, dass die Klemmeinrichtung (2, 7) bei Einleitung einer Kraft von mindestens 1, 0 und höchstens 2,5 N verschiebbar ist.

4. Vorrichtung nach einem der Ansprüche 1 bis 3, **dadurch gekennzeichnet, dass** die Klemmeinrichtung (2, 7) um eine Weglänge D von max. 2 mm verschiebbar ist.

5. Vorrichtung nach einem der Ansprüche 1 bis 4, **dadurch gekennzeichnet, dass** der Sensor photosensibel oder kapazitiv ausgebildet ist.

6. Vorrichtung zur Festlegung des Endes eines Lichtwellenleiters (1.2) in einer Kunststoffferrule (5), nach einem der Ansprüche 1 bis 5, **dadurch gekennzeichnet, dass** die Kunststoffferrule (5) laserversschweißbar ist und das Fixiermittel (13) eine Laserschweißeinrichtung.

7. Vorrichtung nach Anspruch 6, **dadurch gekennzeichnet, dass** die Kunststoffferrule (5) transparent ist und an ihrem von dem Sackloch (5.1) abgewandten Ende gewölbt ist.

8. Vorrichtung zur Festlegung des Endes eines Leiters in einem metallischen Anschlusselement nach einem der Ansprüche 1 bis 5, **dadurch gekennzeichnet, dass** das Anschlusselement (5) zumindest eine Crimpfahne (18) aufweist dass die Fixiereinrichtung (13) aus einem Crimpwerkzeug zur plastischen Verformung der Crimpfahne (18) besteht.

9. Vorrichtung nach Anspruch 8, **dadurch gekennzeichnet, dass** an dem Anschlusselement zumindest ein Paar einander gegenüberstehender Crimpfahnen (18) vorgesehen ist, die durch das Crimpwerkzeug gemeinsam verformbar sind.

## Claims

1. Device for fixing the end of a signal conductor (1.2) with a diameter of less than 0.5 mm in a blind hole (5.1) of a terminal element (5), in which the end is introduced into the blind hole (5.1) parallel to the longitudinal direction of the signal conductor (1.2) and fixed therein by subsequent actuation of fixing means (13), a clamping device (2, 7) being provided for receiving the terminal element (5), **characterised in that** the clamping device is displaceable parallel to the longitudinal direction against the force of a first spring (9), **in that** a sensor is provided for detecting the quantity of displacement, which blocks the clamping device (2, 7) against further displacement by the end of the signal conductor (1.2) on reaching the bottom (20) and at the same time activates the fixing means (13) which connects the signal conductor (1.2) and the terminal element (5) to each other transversely to the longitudinal direction.

2. Device according to claim 1, **characterised in that** the first spring (9) has dimensions such that the clamping device (2, 7) is displaceable on application of a force of not less than 0.5 and not more than 5 N.

3. Device according to claim 1, **characterised in that** the first spring (9) has dimensions such that the clamping device (2, 7) is displaceable on application of a force of not less than 1.0 and not more than 2.5 N.

4. Device according to any of claims 1 to 3, **characterised in that** the clamping device (2, 7) is displaceable by a distance D of not more than 2 mm.

5. Device according to any of claims 1 to 4, **characterised in that** the sensor is designed to be photosensitive or capacitive.

6. Device for fixing the end of an optical fibre (1.2) in a plastic ferrule (5), according to any of claims 1 to 5, **characterised in that** the plastic ferrule (5) is laser-weldable and the fixing means (13) is a laser welding device.

7. Device according to claim 6, **characterised in that** the plastic ferrule (5) is transparent and curved at its end remote from the blind hole (5.1).

8. Device for fixing the end of a conductor in a metal terminal element according to any of claims 1 to 5, **characterised in that** the terminal element (5) has at least one crimping lug (18), **in that** the fixing device (13) consists of a crimping tool for plastic deformation of the crimping lug (18).

9. Device according to claim 8, **characterised in that** on the terminal element is provided at least one pair of mutually opposed crimping lugs (18) which are deformable together by the crimping tool.

## Revendications

1. Dispositif destiné à la fixation de l'extrémité d'un conducteur de signalisation (1.2), d'un diamètre inférieur à 0,5 mm, dans un trou borgne (5.1) d'un élément de raccordement (5), pour lequel l'extrémité est insérée dans le trou borgne (5.1), parallèlement à la direction longitudinale du conducteur de signalisation (1.2), et y est fixée par actionnement subséquent de moyens de fixation (13), un dispositif de serrage (2, 7) étant prévu pour recevoir l'élément de raccordement (5), **caractérisé en ce que** le dispositif de serrage est déplaçable parallèlement à la direction longitudinale, à l'encontre de la force d'un premier ressort (9), **en ce qu'**est prévu un capteur, servant à la détection de l'ampleur du déplacement, bloquant le dispositif de serrage (2, 7) contre tout déplacement supplémentaire lors de l'atteinte du fond (20) par l'extrémité du conducteur de signalisation (1.2) et activant en même temps un moyen de fixation (13), reliant ensemble le conducteur de signalisation (1.2) et l'élément de raccordement (5) transversalement à la direction longitudinale.

2. Dispositif selon la revendication 1, **caractérisé en ce que** le premier ressort (9) est dimensionné de manière que le dispositif de serrage (2, 7) soit déplaçable lors de l'induction d'une force d'au moins 0,5 et d'au plus 5 N.

3. Dispositif selon la revendication 1, **caractérisé en ce que** le premier ressort (9) est dimensionné de manière que le dispositif de serrage (2, 7) soit déplaçable lors de l'induction d'une force d'au moins 1,0 et d'au plus 2,5 N.

4. Dispositif selon l'une des revendications 1 à 3, **caractérisé en ce que** le dispositif de serrage (2, 7) est déplaçable d'une longueur de déplacement D maximale de 2 mm.

5. Dispositif selon l'une des revendications 1 à 4, **caractérisé en ce que** le capteur est de nature photosensible ou capacitive.

6. Dispositif destiné à la fixation de l'extrémité d'un guide d'onde optique (1.2) dans un embout en matière synthétique (5), selon l'une des revendications 1 à 5, **caractérisé en ce que** l'embout en matière synthétique (5) est soudable au laser, et le moyen de fixation (13) est un dispositif de souage au laser.

7. Dispositif selon la revendication 6, **caractérisé en ce que** l'embout en matière synthétique (5) est transparent et bombé à son extrémité opposée au trou borgne (5.1).

8. Dispositif destiné à la fixation de l'extrémité d'un conducteur dans un élément de raccordement métallique, selon l'une des revendications 1 à 5, **caractérisé en ce que** l'élément de raccordement (5) présente au moins une patte de sertissage (18), et **en ce que** le dispositif de fixation (13) est composé d'un outil de sertissage pour la déformation plastique de la patte de sertissage (18).

9. Dispositif selon la revendication 8, **caractérisé en ce qu'**au moins une paire de pattes de sertissage (18) situées en regard l'une de l'autre, déformables conjointement au moyen de l'outil de sertissage, est prévue sur l'élément raccordement.
